# EUROPEAN PATENT SPECIFICATION

(11) **EP 1 931 191 B1**
(45) Date of publication and mention of the grant of the patent: **06.05.2009**
(21) Application number: 06799481.4
(22) Date of filing: 02.10.2006
(51) Int. Cl.: A01G 9/12

(54) **DEVICE AND METHOD FOR CULTIVATING PLANTS, IN PARTICULAR TOMATO PLANTS OR CUCUMBER PLANTS**
GERÄT UND VERFAHREN ZUR KULTIVIERUNG VON PFLANZEN, INSBESONDERE TOMATENPFLANZEN ODER GURKENPFLANZEN
DISPOSITIF ET PROCÉDÉ DE CULTURE DE PLANTS, EN PARTICULIER DE PLANTS DE TOMATES OU DE PLANTS DE CONCOMBRES

(30) Priority: 07.10.2005 NL 1030137
(43) Date of publication of application: 18.06.2008
(73) Proprietor: Vullings Beheer B.V., 5961 PV Horst (NL)
(72) Inventor: LITJENS, Theodorus, Hendrikus, NL-5953 CK Reuver (NL)
(74) Representative: Seezink, George
(86) International application number: PCT/NL2006/000492
(87) International publication number: WO 2007/043860

(56) References cited:
- NL-A- 9 001 981
- NL-C2- 1 025 867
- US-A1- 2005 044 786

## Description

The invention relates to a device for cultivating plants, in particular tomato plants or cucumber plants, which device comprises a substantially vertically extending arrangement for moving a plant in vertical direction *,*see e.g. document NL-A-9001981.

The invention further relates to a method for cultivating plants, in particular tomato plants or cucumber plants.

Such a device and method are known per se from NL-8702251 for cultivating tomatoes, which device comprises a substantially vertically extending arrangement made up of a reel and a string to which a plant is fastened. The reel is connected to a substantially horizontally extending moving device comprising a kind of ball chain, along which ball gears can be moved. The reel and the ball gear are connected by means of a plate provided with two pins, and the ball gear and the reel are connected via gears. The ball gears are interconnected by means of a cable. Upon movement of the ball gear, the reel with the string is unwound by means of the gears, thus creating space for the tomato plant to grow.

A drawback of this device is the fact that the string to which the plant is fastened is connected only to the reel, and the end of the string remote from the reel is freely suspended. When the fruits are being harvested from the plant or the device is being moved, the plant is moved in a reciprocating motion relatively strongly because of this loose end, which leads to a great deal of stress for the plant. Said stress adversely affects the growth and thus the production of the plant. In addition, the risk of damage is relatively great when such movements occur.

The object of the present invention is to provide a stable and efficient device for cultivating plants.

This object is accomplished with the device according to the invention in that the arrangement comprises an endless belt that is passed over at least two pulleys, to which a plant can be fastened, using at least one fastening element, and by means of which belt the plant can be moved in vertical direction.

An endless belt extending between two pulleys is tensioned relatively tautly, and a plant fastened to the belt will hang motionless relatively quickly when fruits are being harvested from the plant or the device is being moved. The effect obtained by using the endless belt is that the plant will experience hardly any stress caused by said movement or said harvesting, which has a positive effect on the plant growth and minimises the risk of damage to the plant.

One embodiment of the device according to the invention is characterised in that the fastening element is movable from a first position, in which the fastening element can be moved over the belt, to a second position, in which the fastening element is secured to the belt at a specific position thereon, and vice versa.

The fastening element may be readily movable by hand between a first position, in which a suitable height can be selected for fastening the plant, to a second position, in which the plant is firmly secured to the belt at a desired height. Because of the use of fastening elements that are connected to the belt, the user need not carry any fastening elements on him any more. Preferably, a number of fastening elements are present on the belt, and the fastening element, and thus the plant, can be set to the desired height by moving the fastening element over the belt in the first position thereof. As a result, the part of the plant on which the fruits grow can be positioned at a desired height at all times, so that a harvester hardly needs to stretch himself or herself for harvesting the fruits.

Another embodiment of the device according to the invention is characterised in that the fastening element comprises a plant holder provided with two pivotally interconnected parts, which can be connected together against spring force by means of a locking mechanism so as to form a closed plant holder.

Such a plant holder is easy to operate and makes it possible to train the plant in an adequate manner. Preferably, the closed plant holder is ring-shaped, the ring being formed by two interconnected ring halves.

Yet another embodiment of the device according to the invention is characterised in that the locking mechanism can be automatically unlocked.

The plant holder is provided with means for automatically unlocking the locking mechanism. Said means may be mechanical means or electronic means. An example of mechanical means is for example a locking mechanism closed under spring force, which mechanism is provided with a catch to be depressed. By moving the belt, the catch is pressed against an element that does not move relative to the belt. By depressing the catch, a leg of the locking mechanism is moved against spring force, as a result of which the connection between the pivotable parts of the plant holder is broken. An example of an electronic means is for example an arrangement wherein, when the locking mechanism passes a specific point, a transmitter transmits a signal to a receiver on the locking mechanism to break the connection between the pivotable parts of the plant holder. Said element or said point may for example be located at a position where the fastener is yet to pass the pulley, which may be the lower(most) pulley and/or the upper(most) pulley. By automatically opening the plant holder and the plant fastened therein near the lower(most) pulley, the plant can be laid on the ground at the end of the season without a human operation being required. The main additional advantage of this is that the waste produced when using the device according to the invention is solely biomass, because no string/fastening means are present in the laid-down plants. Biomass can be further processed or incinerated in an environmentally friendly way.

Another embodiment of the device according to the invention is characterised in that the belt is a caterpillar track, a ball wire or a string provided with knots.

Preferably, the endless belt is a belt according to one of the above embodiments. The term "endless belt" as used herein is to be given a broad interpretation, however, and in principle it therefore comprises any endless object which can be passed over two pulleys and to which a fastener can be connected.

Another embodiment of the device according to the invention is characterised in that the pulleys are rigidly interconnected by a plate in which the pulleys are bearing-mounted.

The arrangement is moved as a rigid unit by means of said plate.

Another embodiment of the device according to the invention is characterised in that the arrangement is movable in horizontal direction by means of a substantially horizontally extending moving device.

By connecting the arrangement to a substantially horizontally extending moving device, the harvested parts of the plant can be laid on the ground in a simple manner.

Yet another embodiment of the device according to the invention is characterised in that a shaft of one of the pulleys is connected, via a common shaft, to a shaft of a gear of the moving device, which gear is movable over a gear rack formed in a section.

Simultaneously with the movement of the substantially horizontally extending moving device, the endless belt extending between two pulleys is moved by means of said common shaft. A lower part of the plant, on which no fruits are present any more, is laid on the ground as a result of said movement in horizontal direction, whilst the part of the plant on which fruits are still present extends along the belt in vertical direction, where it can continue to grow. The fact that the plant can continue to grow in vertical direction through the use of the belt is conducive to a stable plant growth.

Another embodiment of the device according to the invention is
characterised in that the common shaft further extends through the central axis of the gear, with the common shaft being rotatably and translatably mounted in a recess in the section, which recess is located on a side remote from the arrangement.

In this way the common shaft ensures that the endless belt, which is passed over the two pulleys, and the gear are connected to the section and the gear rack in a stable manner, because the gear is positioned in the openings of the gear rack with at least one projection thereof and the common shaft is rotatably and translatably accommodated in a recess in the section.

Yet another embodiment of the device according to the invention is
characterised in that the section comprises a support that extends the entire length of the section between the arrangement and the gear, over which support the common shaft is capable of rotating and translating movement.

In this way the common shaft is stably supported by the section.

Yet another embodiment of the device according to the invention is
characterised in that the moving device comprises a number of gears interconnected by means of at least one connecting element.

The gears are interconnected in a stable manner by means of said connecting elements, so that the gears are held a fixed distance apart in a simple manner and can be moved as one unit over the gear rack.

Yet another embodiment of the device according to the invention is
characterised in that the connecting element comprises an opening extending in the longitudinal direction, in which opening the gear that is connected to the shaft is rotatably accommodated, which shaft is bearing-mounted in the connecting element.

In this way the connecting element is connected to the gear in a simple manner via the shaft.

Yet another embodiment of the device according to the invention is
characterised in that the connecting elements are pivotally interconnected.

In this way passage through a bend in the section, for example, can take place in a simple manner.

Yet another embodiment of the device according to the invention is
characterised in that the connecting element is provided with connecting holes, via which connecting holes two different connecting elements can be joined by means of a pin.

Using such a pin-hole connection, the gears can be pivotally interconnected in a simple manner by means of the connecting elements.

Furthermore it is an object of the invention to provide a method for cultivating plants in an efficient manner.

This object is accomplished with the method for cultivating plants according to the invention wherein a plant is moved by means of a device described above.

The invention will now be explained in more detail with reference to the appended figures, in which:
Figure 1 is a partially perspective view of the device according to the invention;
Figure 2 is a perspective view of a section of the device that is shown in figure 1;
Figure 3 is a cross-sectional view of the device that is shown in figure 1;
Figure 4 is a front view of a connecting element with a gear mounted therein;
Figure 5 is a plan view of an embodiment of the connecting element that is shown in figure 4;
Figure 6a is a front view of the device according to the present invention;
Figure 6b is a side view of the device according to the present invention;
Figures 7a-c are schematic views of the fastening element;
Figure 8 is a side view of a device comprising a vertical arrangement with a reel and a string; and
Figure 9 is a plan view of a space with a number of devices disposed therein.

Like parts are indicated by the same numerals in the various figures.

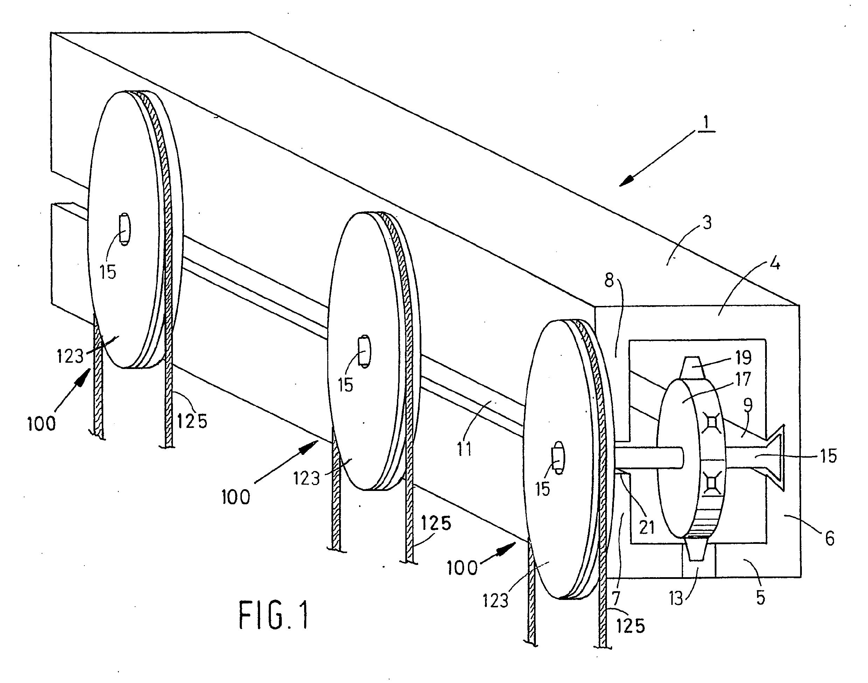

Figure 1 shows a partially perspective view of the device 100 according to the invention. A horizontally extending moving device 1 is provided with a tubular section 3 extending in the longitudinal direction. The section 3 has an upper side 4, a bottom side 5 extending parallel to the upper side 4, a long side 6 extending between the upper side 4 and the bottom side 5, and long sides 7, 8 extending from the bottom side 5 and the upper side 4, respectively, parallel to the long side 6.

A recess 9 extending in the longitudinal direction is formed in the long side 6.

A slot 11 extends between the long sides 7, 8 along the entire length of the section.

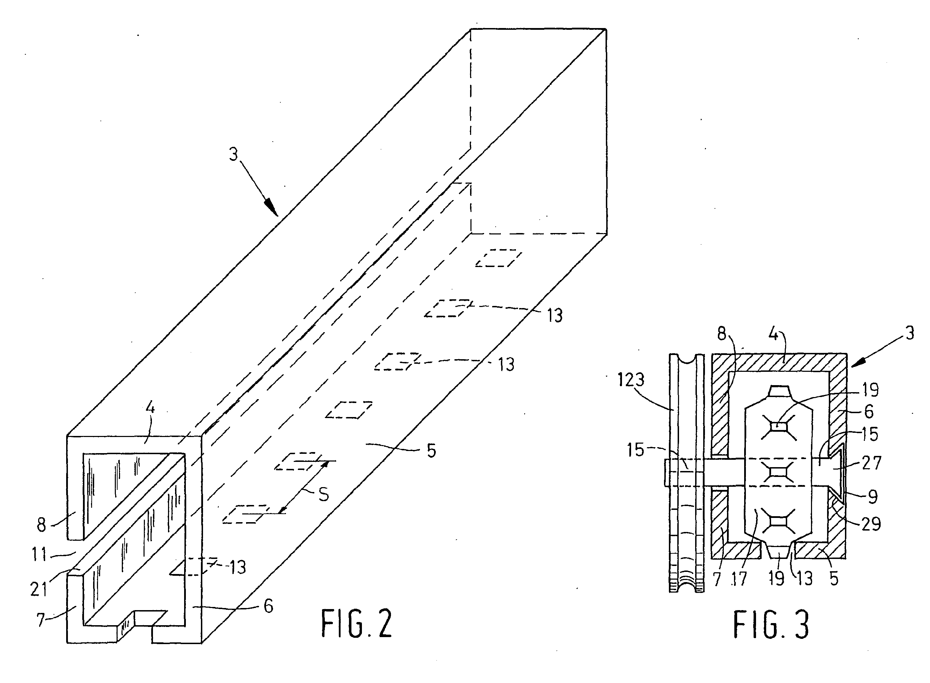

As is shown in figure 2, the bottom side 5 of the section 3 is provided with openings 13 spaced a fixed distance s apart, which openings 13 form a gear rack. Disposed within the section 3 are a number of gears 17, which engage in the openings 13 with teeth 19 thereof, Each gear 17 has a shaft 15, which is rotatably and translatably accommodated with a conical end 27 thereof in the recess 9. At the other end, the shaft 15 is provided with a pulley 123 that is fixedly connected to the shaft 15. An endless belt 125 is passed over the pulley 123. Between the gear 17 and the pulley 123, an edge 21 of the slot 11 supports the shaft 15. In the illustrated embodiment, the belt 125 is a rope.

The recess 9 has a shape 29 that corresponds to the shape of the end 27, so that the shaft 15 is accommodated in the recess 9 in a stable manner.

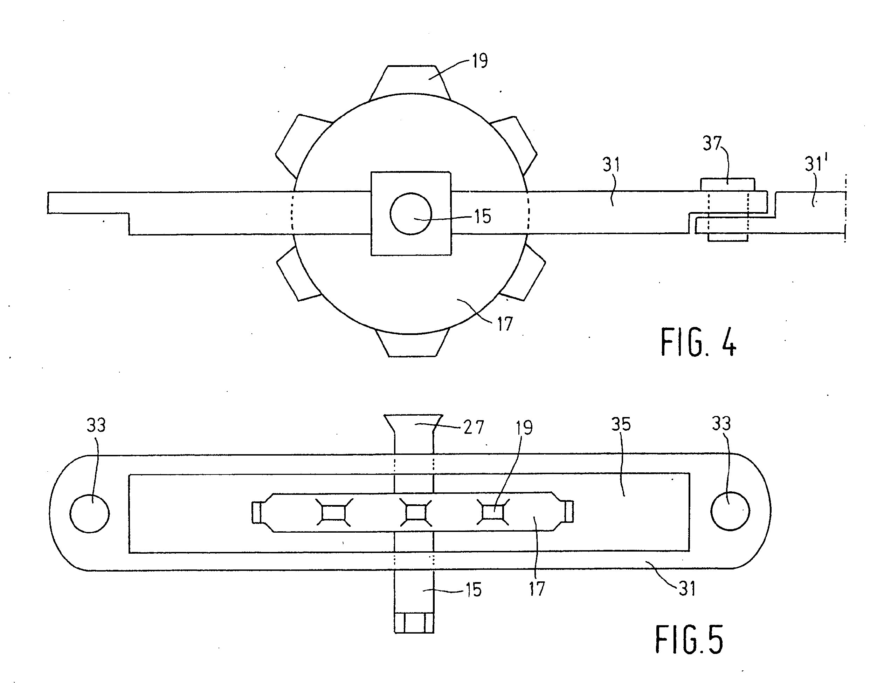

Figure 4 shows a front view of the gear 17 that is connected to the shaft 15, which shaft 15 is bearing-mounted in a connecting element 31. Figure 5 shows a plan view of an embodiment of that which is shown in figure 4. Several gears 17 may be interconnected by means of the connecting element 31.

The elongate connecting element 31 is provided with connecting holes at the end thereof. Located between the connecting holes 33 in the connecting element 31 is an opening 35 extending in the longitudinal direction, in which the gear 17 is rotatably accommodated.

Via connecting elements 31, 31', a first gear 17 can be connected to a second gear (not shown) in a second connecting element 31'. The connecting elements 31, 31' are connected by vertically aligning the connecting holes 33, into which aligned holes 33 a pin 37 can be inserted. The pin 37 pivotally interconnects the two connecting elements 31, 31'. The interconnected connecting elements 31, 31' are movably accommodated in the section 3 by means of the gears 17.

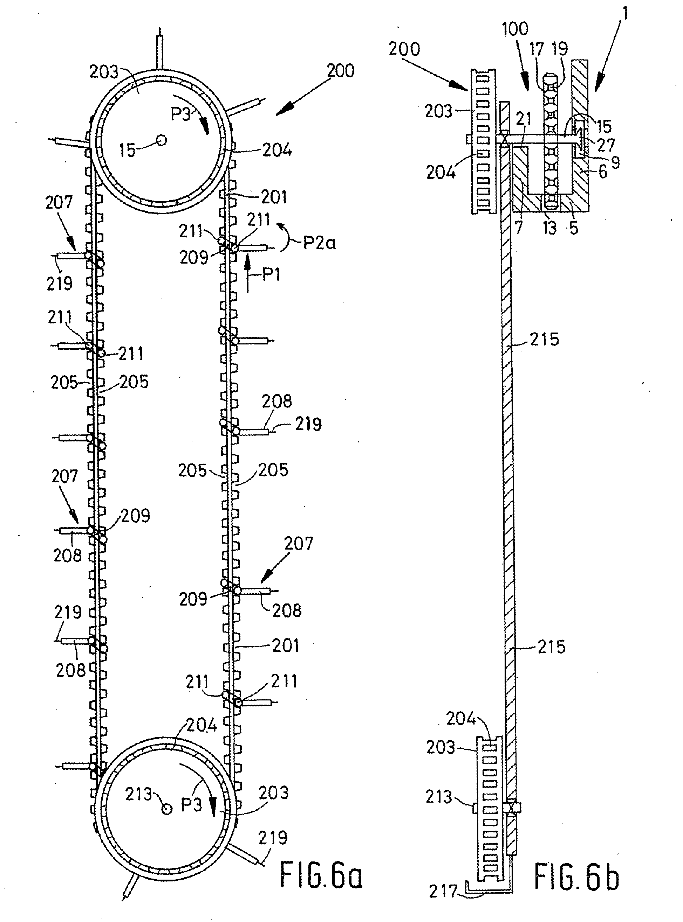

Figures 6a and 6b show a front view and a side view, respectively, of an embodiment of the device 100 according to the present invention. The device 100 comprises a vertically extending arrangement 200 as well as a horizontally extending moving device. The arrangement 200 comprises a caterpillar track 201 (figure 6a), which (endless) caterpillar track 201 is passed over two spaced-apart pulleys 203. The pulleys 203 are provided with teeth 204.

The caterpillar track 201 is provided with openings 205 on two opposite sides thereof, seen in longitudinal direction. The recesses 205 are not positioned directly opposite each other. The teeth 204 of the pulleys 203 are positioned in the recesses 205.

The fastening element 207 comprises a plant holder 208 and a fixing rod 209, which is provided with securing elements 211 at the ends thereof. The securing elements 211 are positioned in the recesses 205 of the caterpillar track 201, thereby securing the fastening element 201 to the caterpillar track 201 in the position referred to as the second position of the fastening element 207.

To move the fastening element 207 from the second position to the first position (not shown), a force must be exerted in the direction indicated by the arrow P1 on the most outwardly positioned securing element 211 of the fastening element 207 that is mounted on the right-hand side of the caterpillar track 201 that is shown in figure 6a. By exerting a force in the direction indicated by the arrow P1, the fastening element 207 is pivoted in the direction indicated by the arrow P2a about the most inwardly positioned securing element 211. The moment the fixing rod 209 extends substantially transversely to the caterpillar track 201, the fastening element 207 can be moved over the caterpillar track 201 in the direction indicated by the arrow P1 and in the opposite direction. A plant that may be held in the plant holder 208 can thus be fastened to the caterpillar track 201 at the desired height by means of the fastening element 207. The fastening element 207 is secured in the second position by inserting one of the securing elements 211 into a recess 205 and pivoting the other securing element 211 into a recess 205 on the other side of the caterpillar track 201.

The two pulleys 203 comprise shafts 15, 213, which are bearing-mounted in a plate 215. The plate 215 keeps the pulleys 203 spaced apart, and the pulleys 203 can be moved in horizontal direction simultaneously by means of the moving device 1. Located near the lower pulley 203 is an immovable element 217, whose function will be discussed below.

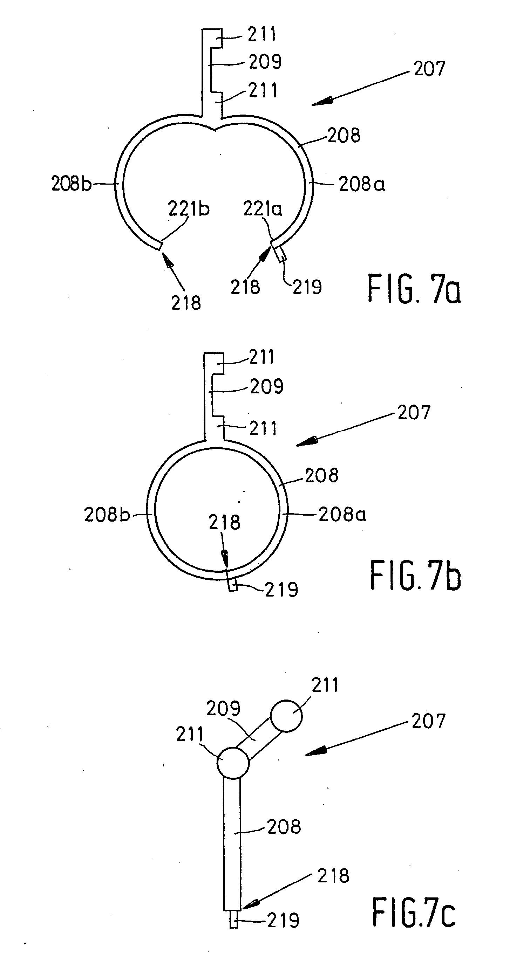

Figures 7a-c show schematic views of the fastening element 207, also referred to as "clipper". The plant holder 208 is fixed to a securing element 211. The plant holder 208 comprises two pivotally interconnected ring halves 208a, 208b, which can be connected together against spring force by means of a locking mechanism 218 so as to form a ring-shaped, closed plant holder 208.

In the illustrated variant, the locking mechanism 218 works as follows. To connect the free ends 221 a, 221 b of the ring halves 208a, 208b together, one end 221 b is provided with an opening, whilst the other end 221 a is provided with a projection. The projection can be inserted into the opening in a force-locked manner, thereby connecting the ring halves 208a, 208b together. It will be understood that many force-locked and form-locked arrangements are possible for connecting the ends 221 a, 221 b of the ring halves 208a, 208b together. The locking mechanism 218 further comprises a catch 219. When a force is exerted on the catch, the force-locked connection will be broken and the ring halves 208a, 208b that have been closed under spring force will move apart.

The operation of the device according to the present invention is as follows. Using the fastening element 207 secured to the caterpillar track 201, a plant is fastened to the caterpillar track 201 by the plant holder 208 in the manner described above. As the plant continues to grow and fruits are harvested from the plant, the caterpillar track 201 is moved in the direction indicated by the arrow P3 by means of the horizontal moving device 1 and the pulleys 203. A part of the plant that has grown in vertical direction can then be fastened to the caterpillar track 201 by means of another fastening element 207.

If the caterpillar track 201 is moved sufficiently far in the direction indicated by the arrow P3, the fastening element 207 and the plant fastened therein will be moved around the lower pulley 203. During said movement, the catch 219 will come into contact with the element 217 that does not move relative to the caterpillar track 201. Upon further movement of the caterpillar track 201 in the direction indicated by the arrow P3, the force-locked connection between the ends 221a, 221 b of the ring halves 208a, 208b of the plant holder 208 will be broken and the plant will be released by the fastening element 207 and be laid on the bottom.

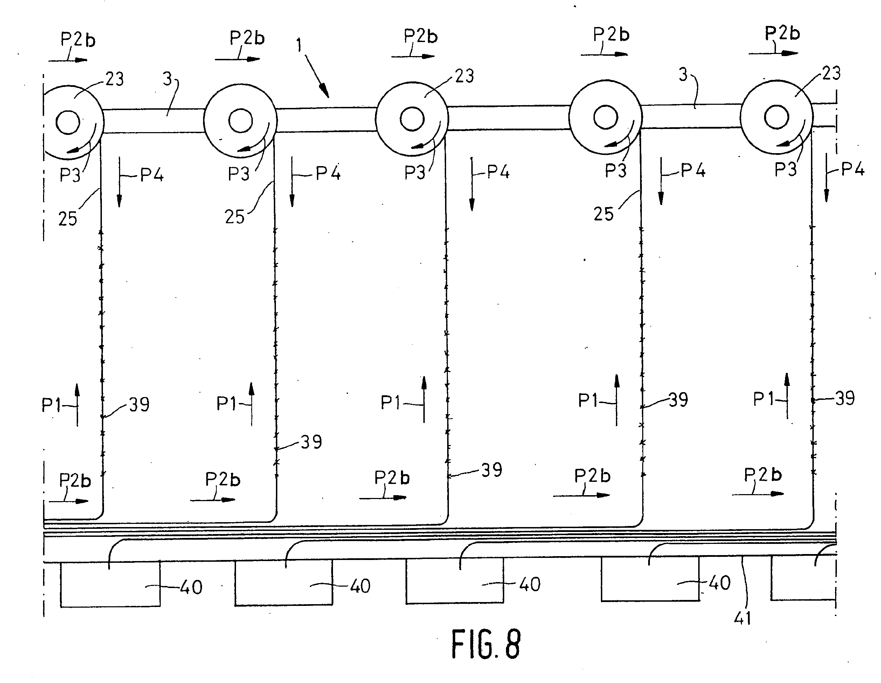

Figure 8 shows the use of the horizontally extending moving device 1. The moving device 1 comprises a vertically extending arrangement as known in the art, i.e. comprising a reel 23 and a string 25. The training of a plant 39 in vertical direction will now be explained based on the use of such a known arrangement. A tomato plant 39 grows upwards along the string 25, in a direction indicated by the arrow P1, from a container 40. By moving the device 1 manually or by means of a motor, the gears 17 as well as the shafts 15 connected to the gears 17 and the reels 23 connected to the shafts 15 are moved in the direction indicated by the arrow P2b. As a result of said rotation, the string 25 is unwound from the reel 23 in a direction indicated by the arrow P4. The unwinding rate of the string corresponds to the average growth rate of the tomato plants 39. As a result of the movement in the direction indicated by the arrow P2a of the string 25 being unwound from the reel 23, parts of the tomato plant 39 on which no tomatoes grow any more are laid on a bottom 41. In this way the part of the plant from which fruits can be harvested yet is given sufficient space to grow, whilst the parts of the tomato plant 39 from which no fruits can be harvested any more lie on the bottom 41.

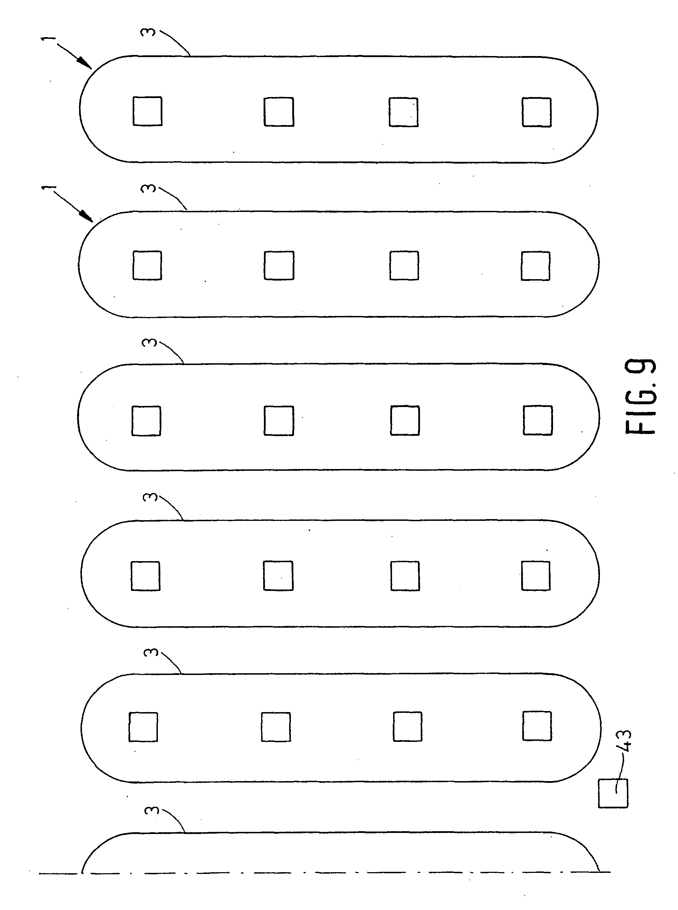

Figure 9 is a schematic plan view of a greenhouse for cultivating tomatoes, in which a number of devices 1 according to the invention are present. The sections 3 have an oval shape, so that the tomato plants 39 present near a wall of a greenhouse can be trained around the bend, so that all the tomato plants 39 will have sufficient space to grow. In each section 3 a number of connecting elements 31 are interconnected in the manner described in the foregoing.

A motor 43 is disposed externally of the devices 1. The motor comprises a chain hoist (not shown) that is connected to at least one connecting element 31 through an opening in the section 3. The chain may be connected in the connecting hole 33 by means of a hook, for example, and the pivotally interconnected connecting elements 31 are moved, continuously or in steps, in the direction of movement (indicated by the arrow P2 in figure 7) over the gear rack formed by the openings 13 by means of the gears 17 by pulling in the chain.

In principle, the motor 43 can drive a number of devices 1 simultaneously. It is also possible to provide a motor for each device 1.

The motor can drive the connecting elements, the gears and the pulleys and a belt passed thereover in various ways. Thus it is possible to install a chain that is passed over rollers in the recess 9, which chain will move the shaft 15 directly.

The frictional forces in the moving device may be so low that the force of gravity that acts on the plants is greater than said frictional forces. In this way the motor would have to function as a brake in controlling the movement of the moving device, or the motor could might be exchanged for a braking system.

Furthermore it is possible to use a U-shaped section rather than a tubular section (see figure 6b). One of the parallel legs of the U-shape is preferably shorter than the other leg, so that the shorter leg can function as a support 13 for the shaft 11 that is spaced from the recess 9.

A preferred material for forming the section according to the invention can be selected from the group consisting of: wood, metal or plastic. The use of one of said materials leads to a strong and stable section.

The device may also be arranged in an S-shape rather than in the oval shape that is shown in figure 7.

The fastening element for fastening the plants to a belt may be any type of fastening element, such as a clamp that can be opened and closed, Velcro or a snap mechanism that fastens the plant to the endless belt by snapping.

The fastening elements may be detachably connected to the belt, so that an operator of the device can carry the fastening element on him and connect it to the belt at the desired position.

The term "belt" is preferably given a broad interpretation, in principle it also comprises a string that is passed over at least two pulleys. Preferably, the belt comprises a relief pattern, in which case the fastening element is placed in the recesses or notches formed by the relief pattern, so that a secured fastening element will not move over the belt.

## Claims

1. A device for cultivating plants, in particular tomato plants or cucumber plants, which device comprises a substantially vertically extending arrangement (200) for moving a plant in vertical direction, **characterised in that** the arrangement comprises an endless belt (201) that is passed over at least two pulleys (203), to which a plant can be fastened, using at least one fastening element, (207) and by means of which belt the plant can be moved in vertical direction.

2. A device according to claim 1, **characterised in that** the fastening element is movable from a first position, in which the fastening element can be moved over the belt, to a second position, in which the fastening element is secured to the belt at a specific position thereon, and vice versa.

3. A device according to claim 1 or 2, **characterised in that** the fastening element comprises a plant holder provided with two pivotally interconnected parts, which can be connected together against spring force by means of a locking mechanism so as to forma closed plant holder.

4. A device according to claim 3, **characterised in that** the locking mechanism can be automatically unlocked.

5. A device according to any one of the preceding claims, **characterised in that** the belt is a caterpillar track, a ball wire or a string provided with knots.

6. A device according to any one of the preceding claims, **characterised in that** the pulleys are rigidly interconnected by a plate in which the pulleys are bearing-mounted.

7. A device according to any one of the preceding claims, **characterised in that** the arrangement is movable in horizontal direction by means of a substantially horizontally extending moving device.

8. A device according to claim 7, **characterised in that** a shaft of one of the pulleys is connected, via a common shaft, to a shaft of a gear of the moving device, which gear is movable over a gear rack formed in a section.

9. A device according to claim 8, **characterised in that** the common shaft further extends through the central axis of the gear, with the common shaft being rotatably and translatably mounted in a recess in the section, which recess is located on a side remote from the arrangement.

10. A device according to claim 9, **characterised in that** the section comprises a support that extends the entire length of the section between the arrangement and the gear, over which support the common shaft is capable of rotating and translating movement.

11. A device according to any one of the preceding claims, **characterised in that** the moving device comprises a number of gears interconnected by means of at least one connecting element.

12. A device according to claim 11, **characterised in that** the connecting element comprises an opening extending in the longitudinal direction, in which opening the gear that is connected to the shaft is rotatably accommodated, which shaft is bearing-mounted in the connecting element.

13. A device according to claim 11 or 12, **characterised in that** the connecting elements are pivotally interconnected.

14. A device according to any one of the claims 11-13, **characterised in that** the connecting element is provided with connecting holes, via which connecting holes two different connecting elements can be joined by means of a pin.

15. A method for cultivating plants, in particular tomato plants or cucumber plants, wherein a plant is moved by means of a device according to any one of the preceding claims.

## Patentansprüche

1. Vorrichtung zur Züchtung von Pflanzen, insbesondere von Tomatenpflanzen oder Gurkenpflanzen, wobei die Vorrichtung eine sich im Wesentlichen vertikal erstreckende Baugruppe (200) zur Verlagerung einer Pflanze in vertikaler Richtung aufweist, **dadurch gekennzeichnet, dass** die Baugruppe ein über mindestens zwei Rollen (203) geführtes Endlosband (201) aufweist, an dem unter Verwendung mindestens eines Befestigungselements (207) eine Pflanze befestigt werden kann und mit dem die Pflanze in vertikaler Richtung verlagert werden kann.

2. Vorrichtung nach Anspruch 1, **dadurch gekennzeichnet, dass** das Befestigungselement von einer ersten Position, in der das Befestigungselement über das Band bewegt werden kann, in eine zweite Position, in der das Befestigungselement in einer bestimmten Position am Band befestigt ist, und umgekehrt, verlagert werden kann.

3. Vorrichtung nach Anspruch 1 oder 2, **dadurch gekennzeichnet, dass** das Befestigungselement einen Pflanzenhalter mit zwei schwenkbar miteinander verbundenen Teilen aufweist, die mit einem Verriegelungsmechanismus entgegen einer Federkraft so miteinander verbunden werden können, dass sie einen geschlossenen Pflanzenhalter bilden.

4. Vorrichtung nach Anspruch 3, **dadurch gekennzeichnet, dass** der Verriegelungsmechanismus automatisch entriegelt werden kann.

5. Vorrichtung nach einem der vorhergehenden Ansprüche, **dadurch gekennzeichnet, dass** das Band eine Gleiskette, eine Kugelkette oder eine mit Knoten versehene Schnur ist.

6. Vorrichtung nach einem der vorhergehenden Ansprüche, **dadurch gekennzeichnet, dass** die Rollen durch eine Platte starr miteinander verbunden sind, in welcher die Rollen mittels Lager angebracht sind.

7. Vorrichtung nach einem der vorhergehenden Ansprüche, **dadurch gekennzeichnet, dass** die Baugruppe mittels einer sich im Wesentlichen horizontal erstreckenden Verlagerungsvorrichtung in horizontaler Richtung bewegt werden kann.

8. Vorrichtung nach Anspruch 7, **dadurch gekennzeichnet, dass** eine Welle einer der Rollen über eine gemeinsame Welle mit einer Welle eines Zahnrads der Verlagerungsvorrichtung verbunden ist, wobei das Zahnrad über eine in einem Abschnitt ausgebildete Zahnstange beweglich ist.

9. Vorrichtung nach Anspruch 8, **dadurch gekennzeichnet, dass** die gemeinsame Welle sich ferner durch die Mittelachse des Zahnrads erstreckt, wobei die gemeinsame Welle drehbar und translatorisch bewegbar in einer Vertiefung im Abschnitt angebracht ist, wobei sich die Vertiefung an einer von der Baugruppe entfernt liegenden Seite befindet.

10. Vorrichtung nach Anspruch 9, **dadurch gekennzeichnet, dass** der Abschnitt eine Auflage aufweist, die sich über die gesamte Länge des Abschnitts zwischen der Baugruppe und dem Zahnrad erstreckt, wobei die gemeinsame Welle über die Auflage eine Dreh- und Translationsbewegung ausführen kann.

11. Vorrichtung nach einem der vorhergehenden Ansprüche, **dadurch gekennzeichnet, dass** die Verlagerungsvorrichtung eine Anzahl von Zahnrädern aufweist, die über mindestens ein Verbindungselement miteinander verbunden sind.

12. Vorrichtung nach Anspruch 11, **dadurch gekennzeichnet, dass** das Verbindungselement eine sich in Längsrichtung erstreckende Öffnung aufweist, wobei das mit der Welle verbundene Zahnrad drehbar in dieser Öffnung untergebracht ist und die Welle mittels Lager im Verbindungselement angebracht ist.

13. Vorrichtung nach Anspruch 11 oder 12, **dadurch gekennzeichnet, dass** die Verbindungselemente schwenkbar miteinander verbunden sind.

14. Vorrichtung nach einem der Ansprüche 11 bis 13, **dadurch gekennzeichnet, dass** das Verbindungselement mit Verbindungslöchern versehen ist, wobei über diese Verbindungslöcher zwei verschiedene Verbindungselemente mit einem Stift zusammengefügt werden können.

15. Verfahren zur Züchtung von Pflanzen, insbesondere von Tomatenpflanzen oder Gurkenpflanzen, bei dem eine Pflanze mittels einer Vorrichtung nach einem der vorhergehenden Ansprüche verlagert wird.

## Revendications

1. Dispositif pour cultiver des plants, en particulier des plants de tomates ou des plants de concombres, lequel dispositif comprend un arrangement s'étendant de manière sensiblement verticale (200) pour déplacer un plant dans une direction verticale, **caractérisé en ce que** l'arrangement comprend une courroie sans fin (201) enroulée autour d'au moins deux poulies (203) à laquelle un plant peut être attaché à l'aide d'au moins un élément d'attache (207), le plant pouvant être déplacé dans une direction verticale à l'aide de la courroie.

2. Dispositif selon la revendication 1, **caractérisé en ce que** l'élément d'attache peut être déplacé d'une première position, dans laquelle l'élément d'attache peut être déplacé au-dessus de la courroie, à une seconde position, dans laquelle l'élément d'attache est fixé à la courroie au niveau d'un emplacement spécifique, et vice versa.

3. Dispositif selon la revendication 1 ou 2, **caractérisé en ce que** l'élément d'attache comprend un support de plant doté de deux pièces reliées entre elles de manière pivotante, lesquelles peuvent être reliées ensemble contre une force de ressort à l'aide d'un mécanisme de verrouillage de façon à former un support de plant fermé.

4. Dispositif conformément à la revendication 3, **caractérisé en ce que** le mécanisme de verrouillage peut être automatiquement déverrouillé.

5. Dispositif conformément à l'une quelconque des revendications précédentes, **caractérisé en ce que** la courroie est une chenille, un câble à billes ou un fil doté de noeuds.

6. Dispositif conformément à l'une quelconque des revendications précédentes, **caractérisé en ce que** les poulies sont reliées entre elles de manière rigide par une plaque dans laquelle les poulies sont montées sur palier.

7. Dispositif conformément à l'une quelconque des revendications précédentes, **caractérisé en ce que** l'arrangement peut être déplacé dans une direction horizontale à l'aide d'un dispositif mobile s'étendant de manière sensiblement horizontale.

8. Dispositif conformément à la revendication 7, **caractérisé en ce qu'**un arbre de l'une des poulies est relié, via un arbre commun, à un arbre d'un engrenage du dispositif mobile, lequel engrenage peut être déplacé sur une crémaillère d'engrenage formée dans une section.

9. Dispositif conformément à la revendication 8, **caractérisé en ce que** l'arbre commun s'entend en outre à travers l'axe central de l'engrenage, l'arbre commun étant monté à rotation et à translation dans un évidement de la section, lequel évidement est situé sur un côté éloigné de l'arrangement.

10. Dispositif conformément à la revendication 9, **caractérisé en ce que** la section comprend un support qui s'étend suivant toute la longueur de la section entre l'arrangement et l'engrenage, l'arbre commun étant capable de se déplacer au-dessus du support suivant un mouvement de rotation et de translation.

11. Dispositif conformément à l'une quelconque des revendications précédentes, **caractérisé en ce que** le dispositif mobile comprend un nombre d'engrenages reliés entre eux à l'aide d'au moins un élément de liaison.

12. Dispositif conformément à la revendication 11, **caractérisé en ce que** l'élément de liaison comprend une ouverture s'étendant dans la direction longitudinale, ouverture dans laquelle l'engrenage relié à l'arbre est logé de manière rotative, l'arbre étant monté sur palier dans l'élément de liaison.

13. Dispositif conformément à la revendication 11 ou 12, **caractérisé en ce que** les éléments de liaison sont reliés entre eux de manière pivotante.

14. Dispositif conformément à l'une quelconque des revendications 11 à 13, **caractérisé en ce que** l'élément de liaison est doté de trous de liaison par l'intermédiaire desquels deux éléments de liaison différents peuvent être joints à l'aide d'une tige.

15. Procédé pour cultiver des plants, en particulier des plants de tomates ou des plants de concombres, dans lequel un plant est déplacé à l'aide d'un dispositif conformément à l'une quelconque des revendications précédentes.
